# EUROPEAN PATENT APPLICATION

(11) **EP 4 810 809 A1**
(43) Date of publication of application: **23.09.2026**
(21) Application number: 25164670.9
(22) Date of filing: 19.03.2025
(51) Int. Cl.: F16C 7/02

(54) **CONNECTING ROD FOR AN INTERNAL COMBUSTION ENGINE OF A MOTOR VEHICLE**

(71) Applicant: Horse Powertrain Solutions, S.L.U., 28108 Alcobendas (Madrid) (ES)
(72) Inventor: JACQUART, Eric, 78084 Guyancourt (FR); ROUTABOUL, Yohann, 78084 Guyancourt (FR)
(74) Representative: Elzaburu S.L.P.

(57) **Abstract**

Connecting rod (1) for an internal combustion engine of a motor vehicle, the connecting rod (1) forming a mechanical connection between a piston of the engine and the crankshaft of the engine, the connecting rod (1) comprising an end connectable to the piston called the foot (2), an end connectable to a crankshaft called the head (3) and a shank (4) between the foot (2) and the head (3), wherein the shank (4) comprises a first area (5) of constant cross-section and a second area (6) of connection with the head (3), such that in the second area (6) of connection with the head (3) the shank cross-section narrows, the ratio between the shank thickness (8) in the narrowest area and the shank thickness (7) in the first area (5) of constant cross-section being strictly positive and less than 50%.

## Description

### Field of the invention

The present invention relates to a connecting rod for an internal combustion engine of a motor vehicle.

### Background

In an internal combustion engine of a motor vehicle, the connecting rod is the part that connects the piston and the crankshaft, converting the reciprocating motion of the piston into the rotational motion of the crankshaft.

A typical connecting rod comprises a small end or foot, a big end or head and a shank (central beam or rod body) between the head and the foot.

A typical shank of a connecting rod presents a cross-section which is much wider than it is thick. The consequence of this is that there is not too much material in the centre, and indirectly a high pressure peak on the bearing of the connecting rod may appear.

When the connecting rod evolves in a very restricted space, it has to be designed with a small width in order to avoid any contact with the walls of the crankcase, and very thick to ensure that the cross-section of the shank required for good mechanical behaviour is respected. This shape of the connecting rod causes that the level of pressure on the bearing is too high in the centre and at the edges. Inevitably, the bearing will degrade very quickly, leading to an engine failure.

FR2949832A1 discloses a connecting rod for internal combustion engine of motor vehicle, that has a rod body provided with two branches made of metal wire that extends from a ring in an end to another ring in another end. The rod has an end, i.e. rod top end, connected to a piston of an internal combustion engine, and another end, i.e. rod bottom end, connected to a crankshaft, where the ends are connected together by a rod body. The rod body is provided with two branches made of a metal wire that extends from a ring in the former end to another ring in the latter end. The metal wire is made of steel. The former ring is provided with a tube section made of steel or cast iron. The aim of this document is to obtain a connecting rod that is lighter and has good mechanical characteristics, but it does not address the behaviour of bearings.

Therefore, it would be desirable to provide a connecting rod with a configuration that makes the pressure on the bearing lower.

### Summary of the invention

Thus, it is an object of the invention to provide a connecting rod for an internal combustion engine of motor vehicle which can overcome the mentioned drawbacks of the prior art connecting rods.

The invention provides a connecting rod for an internal combustion engine of a motor vehicle, the connecting rod forming a mechanical connection between a piston of the engine and the crankshaft of the engine, the connecting rod comprising an end connectable to the piston called the foot, an end connectable to a crankshaft called the head and a shank between the foot and the head, wherein the shank comprises a first area of constant cross-section and a second area of connection with the head, such that in the second area of connection with the head the shank cross-section narrows, the ratio between the shank thickness in the narrowest area and the shank thickness in the first area of constant cross-section being strictly positive and less than 50%.

The invention also provides an internal combustion engine comprises at least one connecting rod 1 of the invention.

With a thinner cross-section in the connection of the shank and the head the pressure on the bearings drops to very acceptable levels.

Other features and advantages of the present invention will become clear from the following detailed description of an illustrative embodiment and not limiting its purpose in connection with the accompanying figures.

### Description of figures

Figure 1 shows a prior art typical connecting rod.
Figure 2 shows a section of the connecting area between the shank and the head in a prior art typical connecting rod.
Figure 3 shows the section of a prior art typical connecting rod which is much wider than thick.
Figure 4 shows a section of a connecting rod designed with small width and very thick.
Figure 5 shows a connecting rod according to the invention.
Figure 6 shows a section of the connecting area between the shank and the head in the connecting rod of figure 5.
Figure 7A shows the section of the connecting area between the shank and the head in a prior art typical connecting rod and the pressure area on the bearing.
Figure 7B shows the section of the connecting area between the shank and the head in the connecting rod of figure 5 and the pressure area on the bearing.

### Detailed description of the invention

The invention refers to a connecting rod 1 for an internal combustion engine of a motor vehicle.

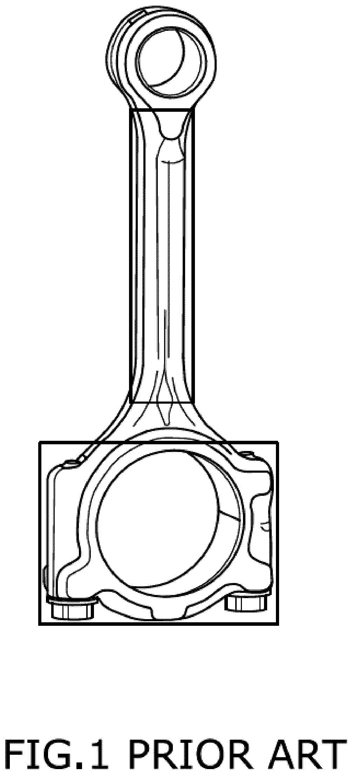

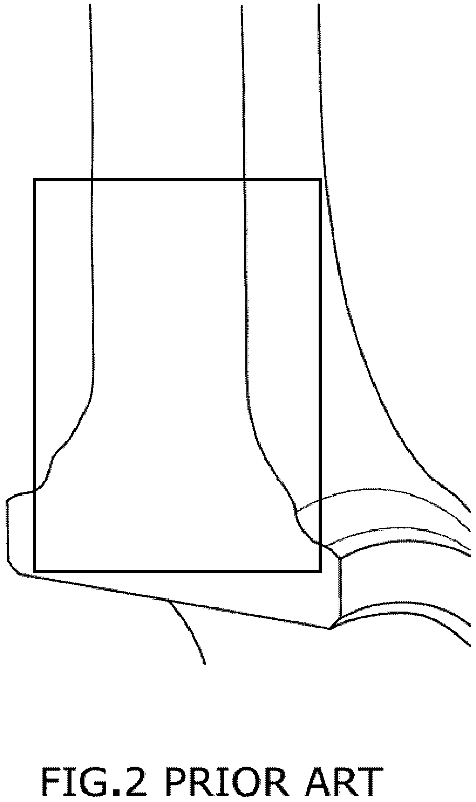

A typical connecting rod can be seen in Figure 1. A connecting rod forms a mechanical connection between a piston of the engine and the crankshaft of the engine. Connecting rods comprise an end connectable to the piston called the foot, an end connectable to a crankshaft called the head and a shank between the foot and the head. There are connection areas between the shank and the foot and between the shank and the head. The section of the connecting area between the shank and the head in a prior art typical connecting rod can be seen in Figure 2.

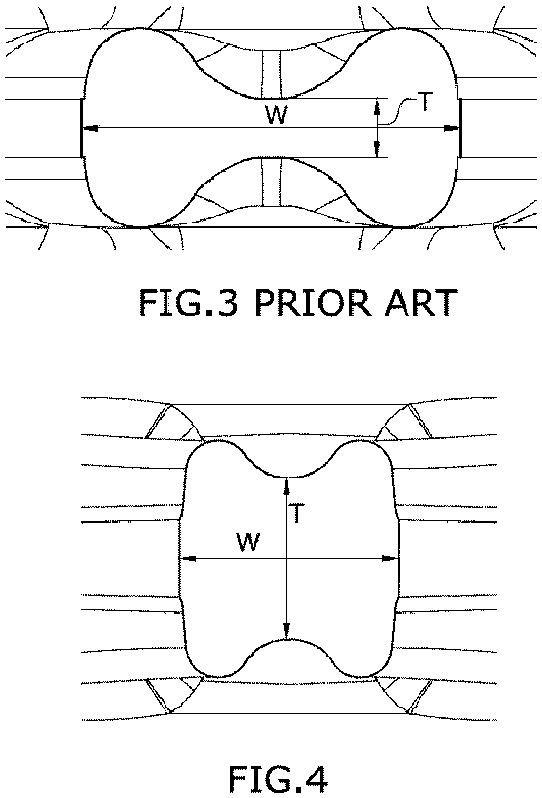

A connecting rod of the prior art can have a section which is much wider than thick, as shown in Figure 3, where W refers to the width and T refers to the thickness.

Figure 4 shows a section of a connecting rod designed with small width and very thick, suitable for engines when the connecting rod evolves in a very restricted space.

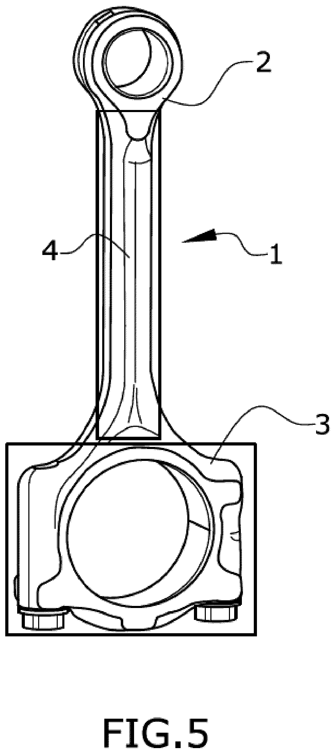

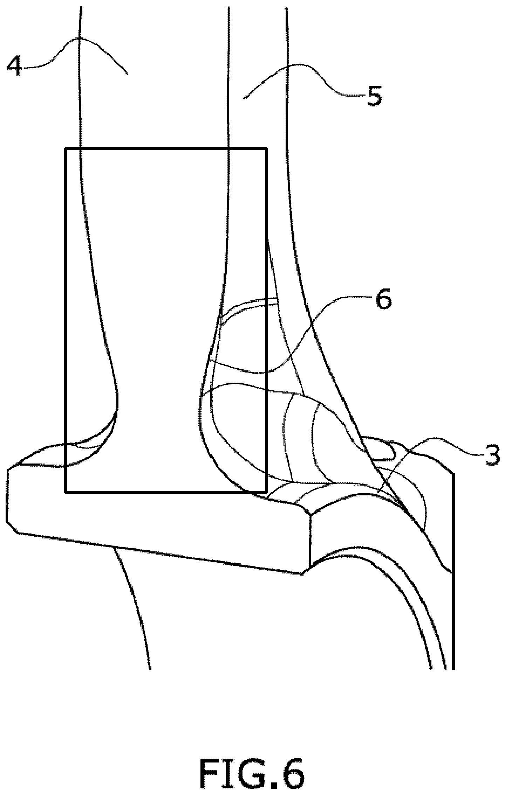

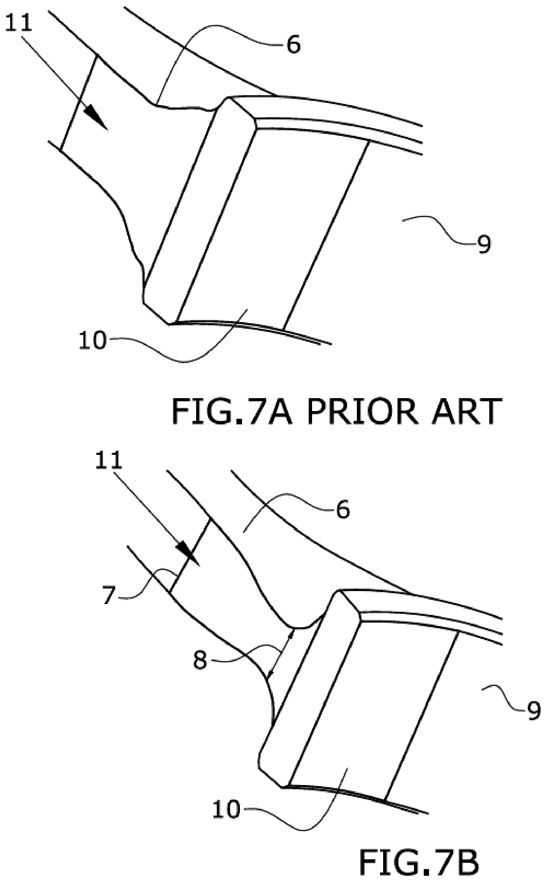

Figure 5 shows a connecting rod 1 according to the invention. The connecting rod 1 has the general configuration comprising a foot 2, a head 3 and a shank 4 between the foot 2 and the head 3. Figure 6 is a partial section of the connecting rod 1 of Figure 5, in which it can be seen that the shank 4 comprises a first area 5 of constant cross-section and a second area 6 of connection with the head 3.In Figures 6 and 7B it can be seen that in the second area 6 of connection with the head 3 the shank cross-section narrows, such that the ratio between the shank thickness 8 in the narrowest area and the shank thickness 7 in the first area 5 of constant cross-section is strictly positive and less than 50%.

Figure 7A corresponds to a prior art connecting rod, and has been placed together with Figure 7B to see the differences in thickness in the second area 6 of connection of the shank 4 with the head 3. In Figures 7A and 7B the pressure areas 10 on the bearing 9 can also be seen.

With an unthinned section (as in Figure 7A), the level of pressure on the bearing 9 is too high in the centre and at the edges, for instance 252Mpa for a maximum limit at 225MPa. Inevitably, this will degrade very quickly, leading to an engine failure.

With the thinner section (as in Figure 7B), the pressure level drops to a very acceptable level, for instance 201MPa for a maximum limit at 225MPa. This solution therefore solves the problem posed and it can be used in future engines to solve space problems.

Figures 7A and 7B also show the direction 11 of piston stroke.

In an embodiment of the invention, the ratio between the shank width W and the shank thickness T is between 0.9 and 1.1.

The invention also provides an internal combustion engine that comprises at least one connecting rod 1 according to any of the described embodiments

Although the present invention has been fully described in connection with preferred embodiments, it is apparent that modifications can be made within the scope, not considering this as limited by these embodiments, but by the content of the following claims.

## Claims

1. Connecting rod (1) for an internal combustion engine of a motor vehicle, the connecting rod (1) forming a mechanical connection between a piston of the engine and the crankshaft of the engine, the connecting rod (1) comprising an end connectable to the piston called the foot (2), an end connectable to a crankshaft called the head (3) and a shank (4) between the foot (2) and the head (3), **characterized in that** the shank (4) comprises a first area (5) of constant cross-section and a second area (6) of connection with the head (3), such that in the second area (6) of connection with the head (3) the shank cross-section narrows, the ratio between the shank thickness (8) in the narrowest area and the shank thickness (7) in the first area (5) of constant cross-section being strictly positive and less than 50%.

2. Connecting rod (1) for an internal combustion engine of a motor vehicle according to claim 1, wherein the ratio between the shank width W and the shank thickness T is between 0.9 and 1.1.

3. Internal combustion engine, **characterized in that** it comprises at least one connecting rod (1) according to claim 1 or 2.
